# EUROPEAN PATENT APPLICATION

(11) **EP 4 596 322 A1**
(43) Date of publication of application: **06.08.2025**
(21) Application number: 23871126.1
(22) Date of filing: 26.09.2023
(51) Int. Cl.: B60P 7/06, B60P 7/15, B65G 63/00

(54) **ROBOTIC VEHICLE FOR TRANSPORTING GOODS**

(30) Priority: 30.09.2022 ES 202231582 U
(71) Applicant: Roda Iberica, S.L., 46600 Alzira (Valencia) (ES)
(72) Inventor: BLANC, Christophe, 46600 Alzira Valencia (ES)
(74) Representative: Ungria López, Javier
(86) International application number: PCT/ES2023/070574
(87) International publication number: WO 2024/069033

(57) **Abstract**

The invention comprises a securing system for securing a load (3), made up of two opposing side devices (5) that are configured to secure the load (3) when it is resting on the roller conveyor (2); wherein each of said side devices (5) is fixed to a pair of vertical frames (6) that are connected at the bottom to a base (1); and wherein the side devices (5) are configured to take an unfolded active position in which contact elements of the two side devices (5) push against two opposite surfaces of the load (3), and a folded inactive position in which the contact elements are separated from said opposite surfaces of the load (3). Each side device (5) includes at least one power element associated with a torque control system that is configured to control the opposing pushing force.

## Description

### Object of the invention

The present invention relates to a robotic vehicle for transporting goods that finds special application in the field of agricultural industry and more specifically in fruit and vegetable post-harvest treatment warehouses where it is necessary to handle and automatically convey containers between the different fruit and vegetable treatment stations housed inside said containers. It should be noted that although the vehicle of the invention is preferably intended to transport the goods housed inside the containers, it is also possible that the goods may be a load consisting of stacked objects without being placed inside containers.

Starting from this premise, the robotic vehicle of the invention includes a securing system for immobilising and securing the load (objects or containers with the products housed therein) when they are resting on a base of the robotic vehicle in order to ensure the immobilisation thereof.

### Background of the invention

The logistics and transport of products within factories is one of the most critical and controlled processes due to the risk of not having the product at the required place at the required time, causing bottlenecks that reduce productivity.

The solution so far has consisted of trains, pallet trucks and human-driven fork-lifts carrying the goods between the required locations. This fact, like any moving machine operated by people, represents an intrinsic risk to both factory operators and the product being transported.

Automated guided vehicles (AGVs) are also known, which are robotic vehicles that move autonomously to transport any product that is placed on the same, without the need for an operator. They can be more or less intelligent depending on the type and the technology they incorporate for the automation thereof in terms of displacement.

One advantage of these vehicles is that they allow a more constant flow of materials and parts through the factories, as well as their traceability, since they are connected remotely and it is possible to know at all times exactly where they are located, what operation they are doing, the status of the inventory, their origin, etc.

Another key point is the improvement in the security area. The speed of response of these automated guided vehicles, due to the large number of sensors they incorporate to avoid any obstacle, exceeds human perception, thus reducing the risk of injury to other factory personnel.

There are various guidance technologies for automated guided vehicles (AGVs), depending on their various devices and elements, both external and internal.

However, for the use of these automated guided vehicles under certain circumstances, problems arise precisely due to the automation thereof, mainly caused when transporting loads made up of containers or vertically stacked objects that can generate stability problems, forcing the automated guided vehicles to move at low speed, especially during turns and changes of direction. These limitations are exacerbated if, in addition, the load being carried can vary in size, which undoubtedly complicates even more the securing thereof and also the control of lateral movements, even if the automated guided vehicles include stopping means for stopping said lateral movements.

The present invention solves these problems by redesigning its transport structure and, above all, by equipping the same with automatic means for securing the load to the platform or base of the respective automated guided vehicle, so that the automated guided vehicle can be more efficient by moving faster and automatically adapting to changes in the size of the load it is carrying.

### Description of the invention

In order to achieve the objectives and avoid the drawbacks mentioned in the previous paragraphs, the invention proposes a robotic vehicle for transporting goods comprising a base on which a drive system is located to move the robotic vehicle as a whole; wherein the base includes a roller conveyor on which a load is placed, which may be stacked containers with the goods therein, or objects that rest directly on the roller conveyor.

The vehicle further comprises a securing system for securing a load made up of two opposing side devices that are configured to secure the load when it is resting on the roller conveyor; wherein each of said side devices is fixed to a pair of vertical frames that are connected at the bottom to a base.

Said side devices can take an unfolded active position in which contact elements of the two side devices push against two opposite surfaces of the load, and a folded inactive position in which the contact elements are separated from said opposite surfaces of the load.

Each side device includes at least one power element that is configured to move the side device into the active position or into the inactive folded rest position. The power element is associated with a torque control system that is configured to control the opposing pushing force of the contact elements on the two opposite surfaces of the load to avoid damaging the same.

Each of the side devices comprises a hanging structure made up of two parallel articulated quadrilateral mechanisms which articulate at and are supported by an upper and a lower axle fixed at their ends to the two frames.

In turn, each of the articulated quadrilateral mechanisms is made up of two parallel vertical bars: a first and a second bar, and two plates: an upper and a lower plate; wherein the two vertical bars and the two plates are coupled together by means of movable articulated connections: upper and lower ones.

The two frames of each side device are related by means of the upper axle and a lower axle, which are arranged in parallel horizontal alignments; wherein the two upper plates and the two lower plates of each side device articulate at the two parallel axles; and wherein the hanging structure of the two articulated quadrilateral mechanisms of the side device is hanging from said parallel axles via the upper plates and the lower plates, which are connected to the axles by means of fixed articulated connections: upper and lower ones.

The first vertical bars of the side devices constitute the contact elements that make contact with the opposite surfaces of the load.

The first two vertical bars of the two articulated quadrilateral mechanisms of each side device are linked by means of two front axles which coincide and are aligned with one of the upper movable articulated connections and one of the lower movable articulated connections.

In one embodiment of the invention, each side device includes at least one additional vertical bar coupled to the two front axles linking the first two vertical bars, which together with the additional vertical bar constitute the contact elements that are in contact with the load during the securing thereof.

In one embodiment of the invention, the power element comprises a single linear actuator to move the whole of each hanging structure made up of the two articulated quadrilateral mechanisms.

Said linear actuator comprises a rod and a housing which articulates at the central portion thereof into two opposite areas of a cross bracket solidly attached to the respective frame; wherein the rod of the linear actuator is connected to the upper plate by means of an articulated connection. The housing of the linear actuator is fitted into a recess in said cross bracket.

The articulated connection of the rod of the linear actuator coincides with the upper movable joint that connects each second vertical rod to the upper plate.

In another embodiment of the invention, each side device includes two linear actuators coupled to the two articulated quadrilateral mechanisms.

In one embodiment of the invention, the upper plates and the lower plates have a triangular shape, wherein the movable articulated connections and the fixed articulated connections are located in proximity to the vertices of said triangular-shaped upper and lower plates.

The two frames on one side of the vehicle are joined to the other two frames on the same level on the other side of the vehicle by two transverse bridges, each of which joins the upper ends of two frames on the two different sides of the vehicle.

To help better understand this specification, and as an integral part thereof, a series of figures is attached, in which the object of the invention is depicted in an illustrative and non-limiting manner.

### Brief description of the figures

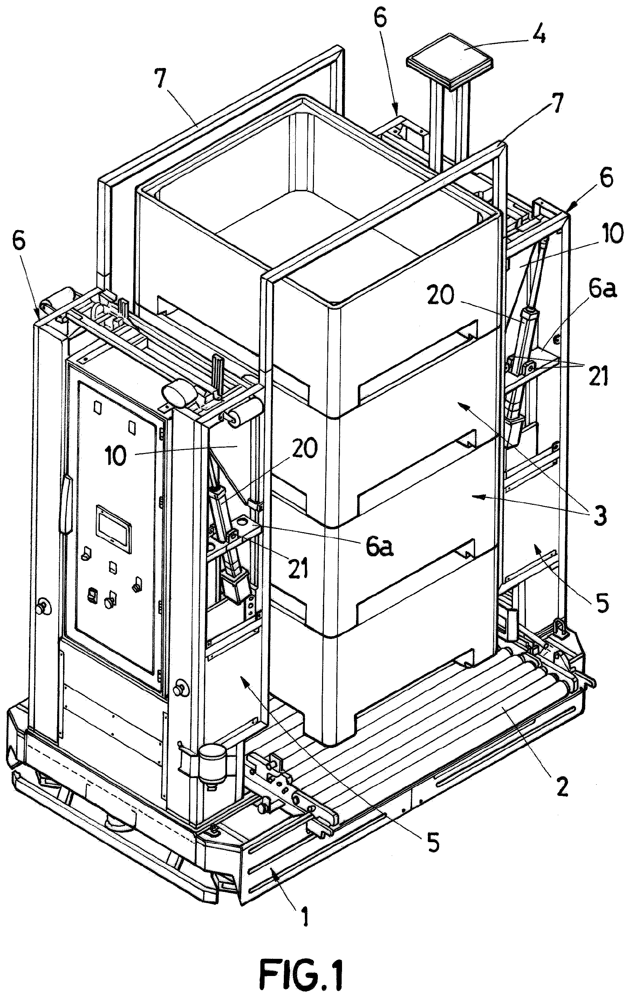

**Figure 1** shows a perspective view of the robotic vehicle for transporting goods that is the object of the invention. It includes two opposing side devices for securing a load resting on the base of the vehicle.
**Figure 2** shows a front view of the vehicle of the invention, where the side devices are located in an inactive rest position.

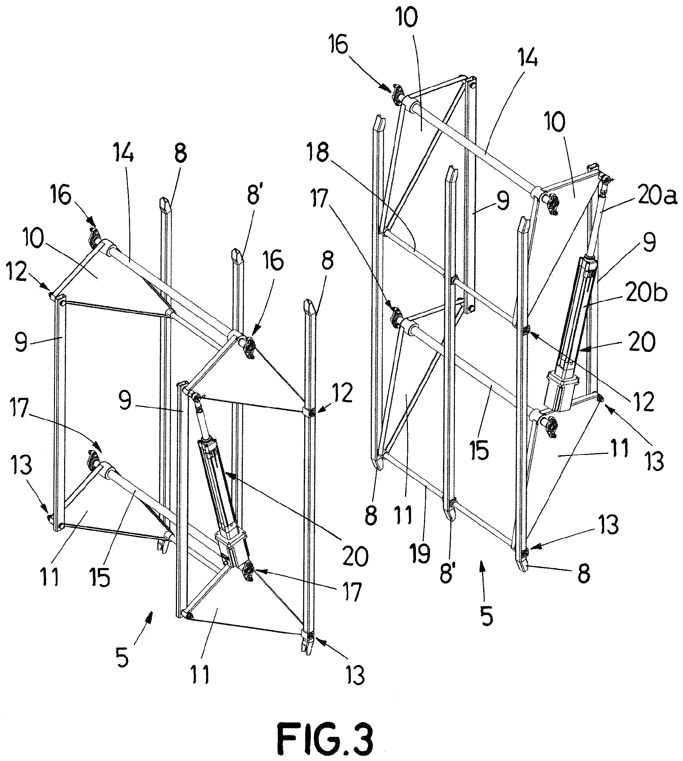

**Figure 3** shows a perspective view of the opposing side devices.
**Figure 4** shows a schematic view of the two side devices in active position securing a load.

### Description of an exemplary embodiment of the invention

Considering the numbering adopted in the drawings, the robotic vehicle for transporting goods comprises a displacement base 1, where a conventional drive system is located to move the robotic vehicle assembly. The base 1 includes a roller conveyor 2 on which sits a load 3 made up of stacked containers housing the goods, which may be made up of fruit and vegetables, without ruling out other products. It is also possible that the load 3 is stacked objects resting directly on the roller conveyor without including containers.

The roller conveyor 2 is configured to receive or extract the load 3 laterally, so that during extraction, the load 3 is transferred to a new location. The robotic vehicle includes an antenna 4 to be able to control the charging 3 wirelessly.

The robotic vehicle of the invention further comprises a securing system for securing a load 3 made up of two side devices 5 configured to be able to secure the load 3 in opposition when it is resting on the roller conveyor 2, so that each of said side devices 5 is fixed to a pair of parallel vertical frames 6 that are connected at the bottom to a base 1.

The two frames 6 on one side of the vehicle are joined to the other two frames 6 on the same level on the other side of the vehicle by means of two transverse bridges 7, each of which joins the upper ends of two frames 6 on the two different sides of the vehicle.

Said transverse bridges 7 are braces that ensure the verticality and rigidity of the frames 6, mainly when the side devices 5 are in an active position securing against the load 3, so that in this active position of the two side devices, a controlled pushing force on the load 3 is generated.

Each of the side devices 5 comprises a hanging structure made up of two articulated quadrilateral mechanisms, each of which is made up of two parallel vertical bars: first 8 and second 9 bar, and two plates; an upper 10 and another lower 11 plate; so that the two vertical bars 8, 9 and the two plates 10, 11 are coupled together by means of mobile articulated connections: upper 12 and lower 13 ones.

The two frames 6 of each side device 5 are related by means of an upper axle 14 and a lower axle 15, which are arranged in parallel horizontal alignments, so that the two upper plates 10 and the two lower plates 11 of each side device 5 articulate at the two parallel axles 14, 15, so that the hanging structure of the two articulated quadrilaterals of the side device 5 is hanging from said parallel axles 14, 15 through the upper plates 10 and the lower plates 11, which are connected to the axles 14, 15 by means of fixed articulated connections: upper 16, and lower 17 ones.

In the embodiment shown in the figures, the plates 10, 11 have a triangular shape, wherein the movable articulated connections 12, 13 and the fixed articulated connections 16, 17 are located in proximity to the vertices of said triangular-shaped plates 10, 11.

The first two vertical bars 8 of the two articulated quadrilateral mechanisms of each side device 5 are linked by means of two front axles 18, 19 which coincide and are aligned with one of the upper movable articulated connections 12 and one of the lower movable articulated connections 13.

In the embodiment shown in the figures, each side device 5 includes an additional vertical bar 8' also coupled to the two front axles 18, 19 linking the first two vertical bars 8.

Each side device 5 also includes at least one linear actuator 20 as a power element to move the whole of the hanging structure made up of the two articulated quadrilateral mechanisms, so that said linear actuator 20 comprises a rod 20a and a housing 20b which articulates at the central portion thereof into two opposite areas 21 of a cross bracket 6a solidly attached to the respective frame 6. For this purpose, the housing 20b of the linear actuator 20 is fitted into a recess of said cross bracket 6a.

The rod 20a of the linear actuator 20 is connected to the upper plate 10 by means of an articulated connection, in the embodiment shown in the figures, said articulated connection coinciding with the upper movable joint 12 which relates each second vertical rod 9 to the respective upper plate 10.

In another embodiment of the invention, two linear actuators 20 coupled to the two articulated quadrilateral mechanisms of each side device 5 could be included, so as to achieve better stability and balance in the mobility of each side device 5 and also in the securing of the load 3.

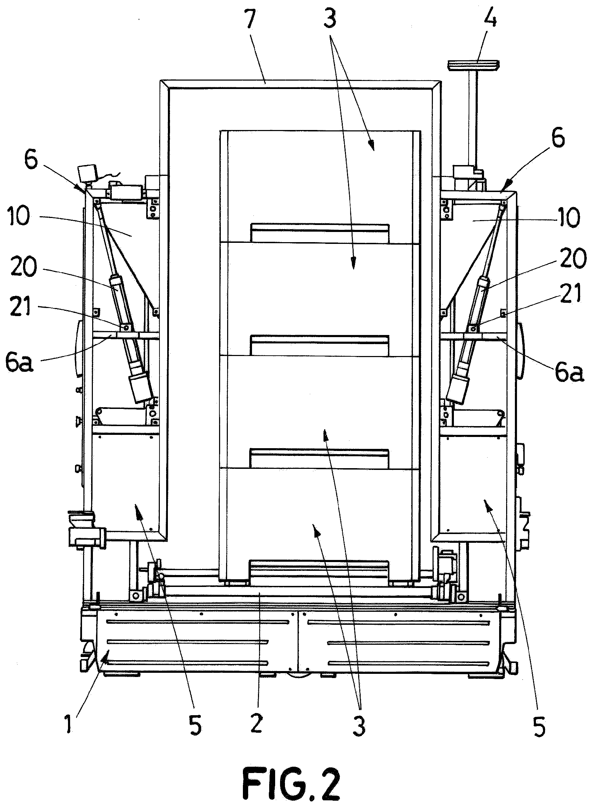

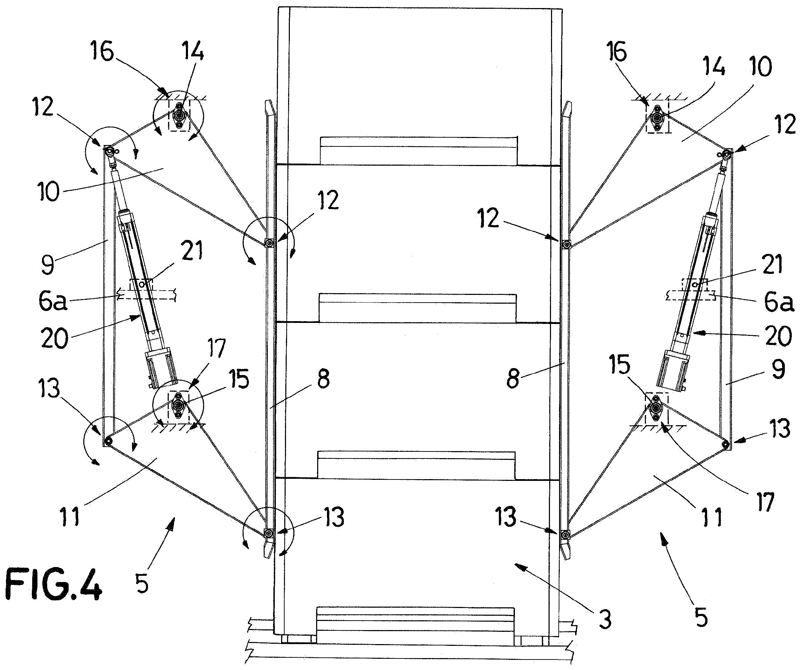

With this arrangement described, when the load 3 is correctly supported and centred on the roller conveyor 2 of the base 1 of the vehicle of the invention, the two opposing side devices 5 are activated going from a folded position (figure 2) to an unfolded position (figure 4), wherein the first vertical bars 8 together with the additional vertical bar 8' push against two opposite surfaces of the load 3. Obviously, the two side devices 5 are moved by the activation of the linear actuators 20 which are the power elements, as mentioned above.

The actuation of the side devices 5 on the load 3, pressing and pushing against the same, is carried out in two phases as described below.

In a first phase, the side devices 5 are unfolded or expanded from a first retracted resting position inside the frames 6, towards the centre of the robotic vehicle where the load 3 is located; all this according to a first verification step, solely for the purpose of determining the size of the load 3.

Once the side devices 5 make contact with said load 3 through the pairs of first vertical bars 8 thereof and the additional vertical bar 8', defining the size of the load 3, in a second phase, the push against said load 3 is increased in order to stabilise and firmly secure the same while maintaining said pushing.

The figures clearly show the two opposing side devices 5 with the double actuation: in the first phase probing the dimension of the load 3, and in the second phase exerting a push against the side devices 5 on the load 3 for stabilisation and firm securing thereof during the displacement process.

The vehicle of the invention includes torque control means that verify the location of the load 3 by making opposing contact with at least the first vertical bars 8 on said load 3, so that with this initial contact the corresponding signal is transmitted to an electronic control device, which then activates, depending on the type of load, the pushing and pressure necessary to stabilise and secure the two side devices 5 by means of the linear actuators 20, prior to the start of the movement of the robotic vehicle assembly.

The torque control means relate to the force to be exerted by each linear actuator 20 taking into account the varying distance between each of the articulated connections 12, 13 and each of the articulated connections 16, 17 of the side devices 5.

Upon reaching the vehicle unloading area, the retractable securing system moves back into the folded position, the articulated quadrilateral mechanisms being retracted in alignment with the frames 6, leaving space for the output of the load 3 from the respective side of the robotic vehicle.

With the vehicle of the invention it is possible to transport the load 3, regardless of its size (obviously it must be adjusted to the maximum load 3 size of the vehicle), in complete safety and at a higher speed than current robotic vehicles and systems.

It should be noted that although the vehicle of the invention is preferably designed for the agricultural sector, its use in other sectors where loads are moved under similar conditions cannot be ruled out.

## Claims

1. **A robotic vehicle for transporting goods,** comprising a base (1) on which a drive system is located to move the robotic vehicle assembly; wherein the base (1) includes a roller conveyor (2) which is configured to support a load (3); **characterised in that**:
- it comprises a securing system for securing a load (3) made up of two opposing side devices (5) that are configured to secure the load (3) when it is resting on the roller conveyor (2); wherein each of said side devices (5) is fixed to a pair of vertical frames (6) that are connected at the bottom to a base (1); and wherein the side devices (5) are configured to take an unfolded active position in which contact elements of the two side devices (5) push against two opposite surfaces of the load (3), and a folded inactive position in which the contact elements are separated from said opposite surfaces of the load (3);
- each side device (5) includes at least one power element that is configured to move the side device (5) into the active position or into the inactive position; wherein said power element is associated with a torque control system that is configured to control the opposing pushing force of the contact elements on the two opposite surfaces of the load (3).

2. **The robotic vehicle for transporting goods,** according to claim 1, **characterised in that**:
- each of the side devices (5) comprises a hanging structure made up of two parallel articulated quadrilateral mechanisms which articulate at an upper axle (14) and a lower axle (15) fixed at their ends to the two frames (6);
- each of the articulated quadrilateral mechanisms is made up of two parallel vertical bars: a first (8) and a second (9) bar, and two plates: an upper (10) and a lower (11) plate; wherein the two vertical bars (8, 9) and the two plates (10, 11) are coupled together by means of movable articulated connections: upper (12) and lower (13) ones;
- the two frames (6) of each side device (5) are related by means of the upper axle (14) and a lower axle (15), which are arranged in parallel horizontal alignments; wherein the two upper plates (10) and the two lower plates (11) of each side device (5) articulate at the two parallel axles (14, 15); and wherein the hanging structure of the two articulated quadrilateral mechanisms of the side device (5) is hanging from said parallel axles (14, 15) via the upper plates (10) and the lower plates (11), which are connected to the axles (14, 15) by means of fixed articulated connections: upper (16), and lower (17) ones;
wherein the contact elements of the side devices (5) are made up of the first vertical bars (8).

3. **The robotic vehicle for transporting goods,** according to claim 2, **characterised in that** the first two vertical bars (8) of the two articulated quadrilateral mechanisms of each side device (5) are linked by means of two front axles (18, 19) which coincide and are aligned with one of the upper movable articulated connections (12) and one of the lower movable articulated connections (13).

4. **The robotic vehicle for transporting goods,** according to claim 3, **characterised in that** each side device (5) includes at least one additional vertical bar (8') coupled to the two front axles (18, 19) linking the first two vertical bars (8).

5. **The robotic vehicle for transporting goods,** according to any one of the preceding claims 2 to 4, **characterised in that** the power element comprises a linear actuator (20) to move the whole of each hanging structure made up of the two articulated quadrilateral mechanisms; wherein said linear actuator (20) comprises a rod (20a) and a housing (20b) which articulates at the central portion thereof into two opposite areas (21) of a cross bracket (6a) solidly attached to the respective frame (6); and wherein the rod (20a) of the linear actuator (20) is connected to the upper plate (10) by means of an articulated connection.

6. **The robotic vehicle for transporting goods,** according to claim 5, **characterised in that** the articulated connection of the rod (20a) of the linear actuator (20) coincides with the upper movable joint (12) which relates each second vertical rod (9) to the upper plate (10).

7. **The robotic vehicle for transporting goods,** according to any one of the preceding claims 5 or 6, **characterised in that** the housing (20b) of the linear actuator (20) is embedded in a recess of said cross bracket (6a).

8. **The robotic vehicle for transporting goods,** according to any one of the preceding claims 5 or 7, **characterised in that** each side device (5) includes two linear actuators (20) coupled to the two articulated quadrilateral mechanisms.

9. **The robotic vehicle for transporting goods,** according to any one of the preceding claims 2 to 8, **characterised in that** the upper plates (10) and the lower plates (11) have a triangular shape, wherein the movable articulated connections (12, 13) and the fixed articulated connections (16, 17) are located in proximity to the vertices of said triangular-shaped upper plates (10) and lower plates (11).

10. **The robotic vehicle for transporting goods,** according to any one of the preceding claims, **characterised in that** the two frames (6) of one side of the vehicle are joined to the other two frames (6) on the same level on the other side of the vehicle by means of two transverse bridges (7), each of which joins the upper ends of two frames (6) of the two different sides of the vehicle.
